# EUROPEAN PATENT SPECIFICATION

(11) **EP 3 850 865 B1**
(45) Date of publication and mention of the grant of the patent: **13.09.2023**
(21) Application number: 19758694.4
(22) Date of filing: 21.08.2019
(51) Int. Cl.: H04Q 1/14

(54) **ADAPTOR**
ADAPTER
ADAPTATEUR

(30) Priority: 11.09.2018 EP 18193869
(43) Date of publication of application: 21.07.2021
(73) Proprietor: British Telecommunications public limited company, London E1 8EE (GB)
(72) Inventor: BOTTOMLEY, Michael, London EC4V 5BT (GB)
(74) Representative: British Telecommunications public limited company Intellectual Property Department
(86) International application number: PCT/EP2019/072406
(87) International publication number: WO 2020/052930

(56) References cited:
- US-A- 5 274 692
- US-A1- 2006 083 368

## Description

The present invention relates to an adaptor for installing new exchange equipment to a distribution block of a telecommunications network.

### Background

A distribution block (or "frame") facilitates connection of subscriber and exchange network equipment by acting as a terminal connection point for wiring from such equipment. A typical distribution block may have hundreds, if not thousands, of subscriber-exchange connection points, thereby serving as many subscribers. As a result, upgrading distribution blocks with new exchange equipment is a time- and labour-intensive process that requires every exchange connection to be removed and then replaced with individual new connections from the new exchange equipment.

Existing methods of upgrading a distribution block may also cause unnecessary and lengthy disruption to services for subscribers.

It is therefore an aim of the present invention at least to alleviate some of the aforementioned problems.

US5274692A discloses, given simultaneous connection of the subscriber line circuits by way of a main distributor to a new switching center and to an existing or old switching center, subscriber terminals that are successively selected proceeding from the new switching center and the old switching center so as to produce connections from a test terminal to these subscriber line circuits. A tone generator of the new switching center supplies a test code word by way of these connections that proceeds via a termination-associated test connection contact and via an external test bus to a code character receiver of the new switching center and is checked therein for coincidence with the test code word.

### Statements of invention

According to a first aspect of the present invention, there is provide an adaptor for retrofitting new exchange equipment to a distribution frame of a telecommunications network, the distribution frame having a connection for existing exchange equipment and a corresponding paired connection for subscriber equipment, the adaptor comprising: an engagement formation for engaging the adaptor to the distribution frame; a first electrical connector for connecting to the connection for subscriber equipment; and a second electrical connector for connecting new exchange equipment the distribution frame via the adaptor, wherein the first and second electrical connectors are in electrical communication, and wherein the adaptor comprises only one first electrical connector and only one second electrical connector. In this way, the adaptor is arranged to connect to only one subscriber equipment at a time and to only one new exchange equipment. In this way, an adaptor is provided that better balances convenience of installing new exchange equipment and disruption to individual subscribers.

As used herein, the term "connector" preferably connotes a mechanical and/or an electrical connector.

Preferably, the new exchange equipment connects directly to the adaptor. Preferably, the adaptor is arranged to connect the new exchange equipment to the distribution frame only via the second electrical connector.

Preferably, the first and/or second electrical connectors are, at least in part, arranged externally on the adaptor.

Preferably, the first electrical connector is configured so as only to connect to the connection for subscriber equipment.

Preferably, the second electrical connector provides a removable connection for the new exchange equipment.

Optionally, the second electrical connector is configured so as to be incompatible for connection with the connection for subscriber equipment.

Preferably, the first electrical connector is electrically isolated from the connection for existing exchange equipment when the adaptor is *in situ.* As used herein, the term *"in situ"* in relation to the adaptor preferably connotes the first electrical connector being connected to the connection for subscriber equipment and/or when the adaptor is engaged to the distribution frame.

Optionally, a connector for the connection for existing exchange equipment is absent from the adaptor, thereby isolating the first electrical connector. Optionally, the first electrical connector is selectively electrically isolated by means of a switch. Optionally, the adaptor comprises a controller for controlling the switch.

Preferably, the engagement formation comprises the first electrical connector and/or the second electrical connector.

For ease of access, preferably the second electrical connector is arranged so as to be exposed for new electrical connections when the adaptor is *in situ.*

Preferably, the first electrical connecter is arranged to connect to the connection for subscriber equipment via a surge protector interface of the distribution frame.

Preferably, the adaptor is arranged to connect to the surge protector interface in place of a surge protector module. Optionally, the adaptor prevents the connection of a surge protector module to the surge protector interface, for example by making the surge protector interface inaccessible to the surge protector module.

Preferably, the engagement formation is configured to engage with the surge protector interface. The surge protection interface may be a 3-, 4-, 5-, or 7-pin and/or -socket connector.

Optionally, the first and/or second electrical connector/s comprise electrical pins and/or sockets. Optionally, the first and/or second electrical connector/s comprise a tool-free wire connector. Optionally, the first and/or second electrical connector/s comprise a: snap-fit; spring-loaded; plug and socket; and/or screw mechanism.

Preferably, the adaptor further comprises a locating member for aligning and/or orientating the first electrical connector with the connection for subscriber equipment. Preferably, the locating member cooperates with a complementary formation on the distribution frame, and more preferably wherein the complementary formation is a grounding socket.

Preferably, the second electrical connector is arranged distally to the first electrical connector. Preferably, the second electrical connector is arranged on a rear of the adaptor. Preferably, the first electrical connector is arranged on a front of the adaptor. Preferably, the second electrical connector is arranged to face in an opposite direction to the first electrical connector. Preferably, the second electrical connector is arranged to face in the same direction as the first electrical connector.

Preferably, the engagement formation, the first electrical connector and the second electrical connector are integrally formed.

Preferably, the second electrical connector is arranged so as to receive a connection from the new exchange equipment from a direction that is perpendicular or parallel to the direction in which the first electrical connector is connected to the connection for subscriber equipment.

Optionally, the adaptor comprises a wire restraint for restraining wires from the new exchange equipment that is connected to the second electrical connector. Optionally, the wire restraint is provided distally to the first electrical connector. Optionally, the wire restraint is provided proximate to the second electrical connector.

Preferably, the first and/or second electrical connectors comprise a pair of electrical contacts for connecting to a pair of wires.

Preferably, the adaptor comprises an overcurrent protector. Optionally, the overcurrent protector is in the form of a surge protector and/or a circuit breaker. Optionally, the overcurrent protector comprises a gas discharge tube.

Preferably, the overcurrent protector is connected between (in an electrical sense) the first and second electrical connectors.

Optionally, the adaptor comprises a wire stripper, which may be formed as part of the second electrical connector.

Preferably, the adaptor comprises a ground connector. Preferably, the ground connector comprises the locating member, and more preferably the ground connector is in the form of a pin or socket.

Optionally, the subscriber equipment is, or serves, Customer Premises Equipment (CPE).

According to another aspect of the invention, there is provided a telecommunications network comprising an adaptor as described above.

According to another aspect of the invention, there is provided a method of retrofitting, by means of an adaptor, new exchange equipment to a distribution frame of a telecommunications network, the distribution frame having a connection for existing exchange equipment and a corresponding paired connection for subscriber equipment, the method comprising the steps of: engaging the adaptor to the distribution frame by means of an engagement formation of the adaptor; electrically connecting the adaptor to the connection for subscriber equipment by means of a first electrical connection of the adaptor; and electrically connecting the adaptor to new exchange equipment by means of a second electrical connection of the adaptor, wherein the first and second electrical connections are in communication, thereby to connect new exchange equipment to the connection for subscriber equipment, and wherein the adaptor comprises only one first electrical connection and only one second electrical connection. Optionally, the method further comprising the step of maintaining the connection between the existing exchange equipment and the distribution frame. Preferably, the adaptor is connected to only one connection for subscriber equipment. Preferably, the adaptor is connected to only one new exchange equipment. The adaptor may further be configured as outlined above.

The invention extends to any novel aspects or features described and/or illustrated herein. The invention extends to methods and/or apparatus substantially as herein described and/or as illustrated with reference to the accompanying drawings.

Any apparatus feature as described herein may also be provided as a method feature, and vice versa. As used herein, means plus function features may be expressed alternatively in terms of their corresponding structure, such as a suitably programmed processor and associated memory.

Any feature in one aspect of the invention may be applied to other aspects of the invention, in any appropriate combination. In particular, method aspects may be applied to apparatus aspects, and vice versa. Furthermore, any, some and/or all features in one aspect can be applied to any, some and/or all features in any other aspect, in any appropriate combination. It should also be appreciated that particular combinations of the various features described and defined in any aspects of the invention can be implemented and/or supplied and/or used independently.

In this specification the word 'or' can be interpreted in the exclusive or inclusive sense unless stated otherwise.

Furthermore, features implemented in hardware may generally be implemented in software, and vice versa. Any reference to software and hardware features herein should be construed accordingly.

The invention extends to an adaptor or method substantially as herein described and/or substantially as shown in Figures 2 to 4. The present invention is now described, purely by way of example, with reference to the accompanying diagrammatic drawings, in which:
Figure 1 is a schematic diagram of a portion of telephony network, including a distribution block; and
Figures 2, 3 and 4 show examples of adaptors for installing new exchange equipment to the distribution block.

### Specific Description

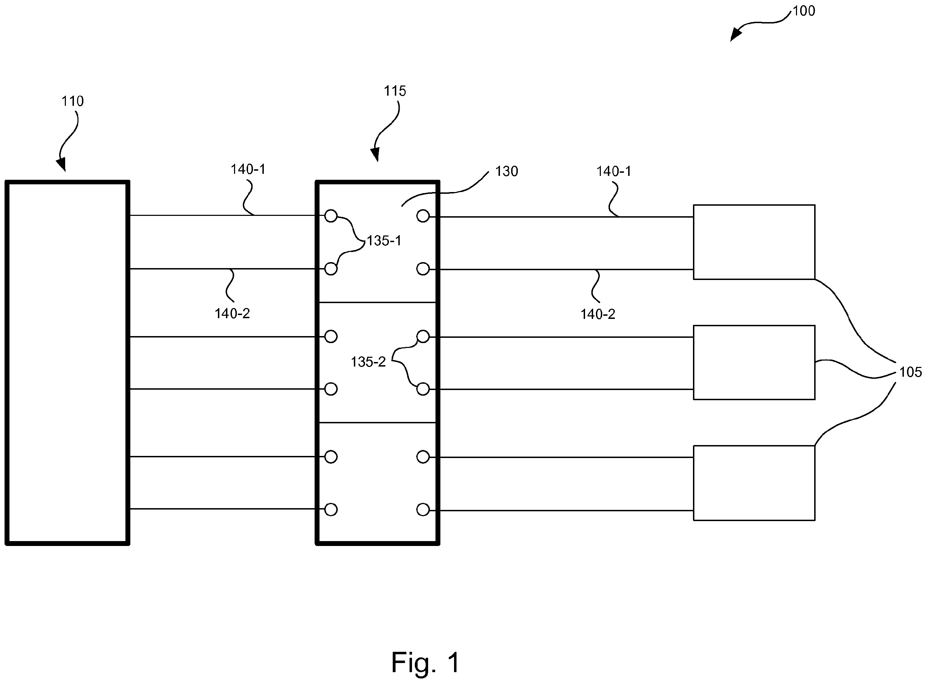

Figure 1 is a schematic diagram of a portion of a telecommunications network 100 that includes subscriber equipment 105 (such as a telephone, modem and/or router, connected via suitable infrastructure, such as distribution points and street cabinets), exchange equipment 110 (such as a telephone switch, a repeater and/or a digital subscriber line access multiplexer), and a distribution block 115.

The distribution block acts as the terminal point for wiring from the subscriber equipment 105 and from the exchange equipment 110. A plurality of subscriber equipment 105 is wired to the exchange equipment 110 via the distribution block 115, thereby to provide a connection between pairs of subscriber and exchange equipment, and hence provide telecommunication services to the subscriber equipment 105.

To facilitate such connections, the distribution block 115 comprises a plurality of subscriber-exchange connection interfaces 130 that allow connection of subscriber and exchange equipment, thereby forming subscriber-exchange pair connections on the distribution block. The subscriber-exchange connection interface 130 comprises individual connection points 135 for wiring from exchange equipment 135-1 and from subscriber equipment 135-2.

In more detail, subscriber equipment 105 is wired to a subscriber connection point 135-2 via wires 140 (also referred to as "tip and ring lines" and a "twisted pair"). In the example shown, the wires 140 consist of a wire for carrying a transmit signal 140-1, and a wire for carrying receive signal 140-2. Accordingly, the wires 140 are connected to a corresponding pair of subscriber connection points 135-2, one for receiving transmit signals from wire 140-1 and another for receiving receive signals from wire 140-2.

The exchange equipment 110 is wired 140 to exchange connection points 135-1 in a corresponding manner so as to form a subscriber-exchange pair connection, and therefore the exchange connection point 135-1 comprises a corresponding pair of individual connections for transmit and receive signals from the exchange equipment 110.

In the example shown in Figure 1, the subscriber-exchange connection interface 130 is a surge protector interface. Typically for such arrangements, a surge protector module (not shown) is connected to the surge protector interface, and specifically to the exchange and subscriber connection points 135, so as to complete a subscriber-exchange pair connection. The surge protector module therefore acts as an electrical bridge between the exchange and subscriber connection points 135.

At the same time, the surge protector module comprises an overcurrent protector (e.g. in the form of a gas discharge tube) so as to provide current protection for the subscriber and exchange equipment that is connected via the surge protector module. Examples of surge protector interfaces include 3-, 4-, 5- and 7-pin interfaces (so-named because of the number of connection points and/or electrical ground connections provided on the interface or module).

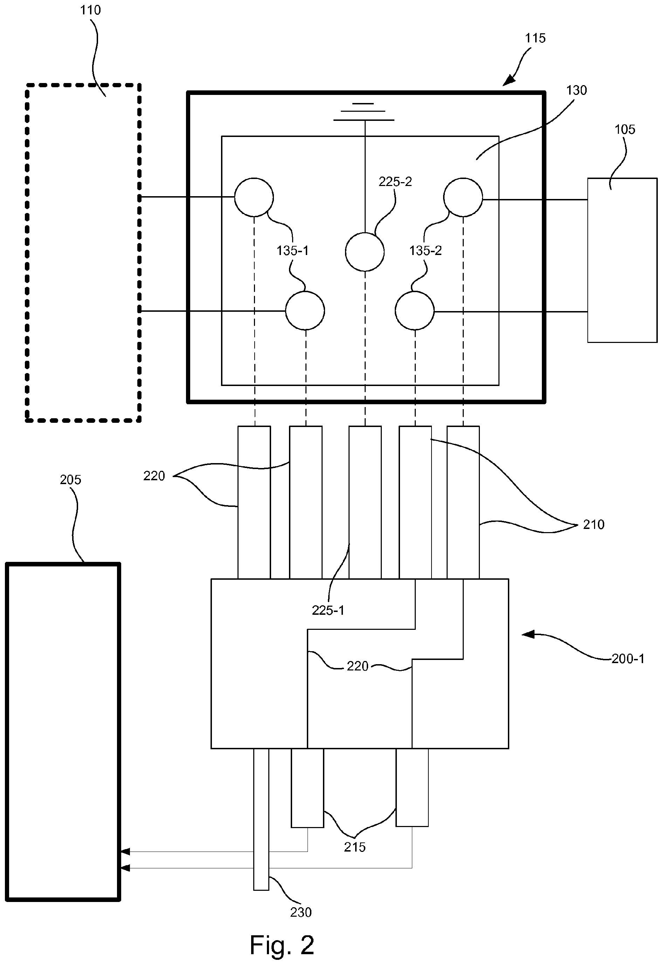

Figures 2 to 4 are schematic diagrams of adaptors 200 for installing new exchange equipment 205 to the distribution block 115.

In overview, the adaptors 200 are configured to connect to a subscriber-exchange connection interface 130; where such an interface is a surge protector interface, the adaptors are intended to replace the surge protector module.

As shown in Figures 2 to 4, the adaptors 200 comprise a first electrical connector 210 for connecting to the subscriber connection point 135-2. The first electrical connector 210 is configured mechanically to mate with the subscriber connection point 135-2 so as to engage the adaptor to the distribution block 115. For example, the first electrical connector 210 is in the form of (a pair of) pins or sockets for connecting subscriber-exchange connection interface 130.

The adaptors 200 also comprise a second electrical connector 215 for connecting to new exchange equipment 205 that is intended to replace the existing exchange equipment 110 already connected to the distribution block 115.

For ease of installation of the new exchange equipment, the second electrical connector 215 comprises a tool-less coupling for wires from the new exchange equipment. For example, the coupling is in the form of a socket-, friction-, threaded-, ring-, bayonet-, and/or clamping-fitment. Still further, the coupling comprises a formation and/or mechanism for stripping or breaking an insulating sheath of wires; in this way, the wires 140 are prepared for connection and then connected to the adaptor without any additional tools.

In order to retrofit a connection between the subscriber equipment 105 and new exchange equipment 205, the first 210 and second 215 electrical connectors are in electrical communication by means of internal wiring 220 within the adaptor.

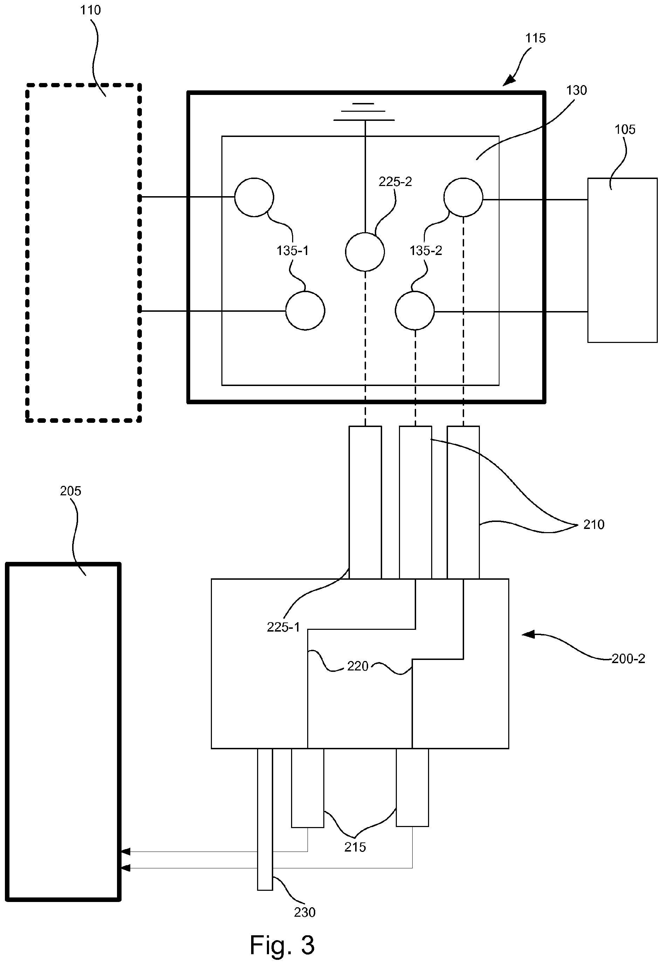

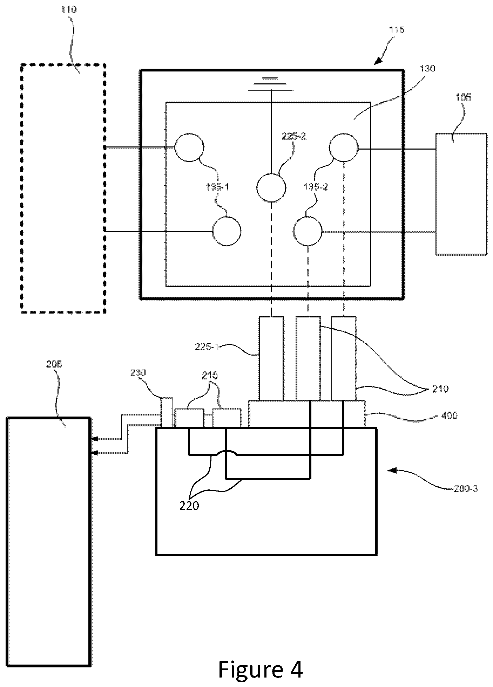

In addition, the first electrical connector 210 is electrically isolated from the existing exchange equipment 110. In the example shown in Figure 2, a connector 220 (shown as a pair of pins) is provided on the adaptor 200-1 for connecting to the exchange equipment connection point 135-1; however, the connector 220 is not wired to the first electrical connector 210. In the examples shown in Figures 3 and 4, the adaptor 200-1 is provided without any connections for the existing exchange equipment connection point 135-1 thereby isolating the first electrical connector 210 from the existing exchange equipment 110. As a result, only the first electrical connector 210 (and/or a grounding pin 225-1, as outlined in more detail below) acts mechanically to engage the adaptors 200-2 and 200-3 to the distribution block.

The adaptors 200 are provided with only a single first electrical connector 210 (*e.g.* a single pair of pins). In this way, the adaptors are capable of connecting to only one subscriber connection point 135-2, and therefore to only one subscriber equipment 135-2, at a time. Accordingly, retrofitting an entire distribution block with new exchange equipment using adaptors 200 requires as many adaptors as there are subscriber equipment connections points 135-1. As a result, in the event a single adaptor fails, disruption of services only occurs for the subscriber for whom the adaptor has failed. Likewise, when replacing the adaptor, removal of the adaptor only results in disruption of services to this single su bscri ber.

Similarly, the adaptors 200 are provided with only a single second electrical connector 215. As a result, the adaptors 200 provide only a one-to-one connection between exchange and subscriber equipment.

The adaptors 200 are also provided with a grounding pin 225-1 for connecting to ground via the distribution block 115, and in particular via a dedicated grounding socket 225-2 provided on the subscriber-exchange connection interface 130. At the same time, the grounding pin also serves as a locating pin to ensure that the adaptor is correctly aligned and/or orientated for connection to the distribution block.

In order to retrofit new exchange equipment, the adaptor 200 is connected to the subscriber-exchange connection interface 130 (having removed any surge protector modules) and wires from the new exchange equipment are connected to each individual adaptor.

The examples of adaptors 200 shown in Figure 2, 3 and 4 differ, not least, in the arrangement of the second electrical connector 215.

With reference to adaptors 200-1 and 200-2 of Figures 2 and 3 (respectively), to facilitate ease of connection (given the dense packing of connection points 135 in a distribution block), the second electrical connector 215 is arranged distally to the first electrical connector 210, at a rear of the adaptor. In addition, the second electrical connector 215 is orientated to face directly away from the first electrical connector 210. As a result, the second electrical connector 215 receives wires in substantially the same direction as that in which the first electrical connector 210 is connected to the subscriber-exchange connection interface 130, *i.e.* towards the subscriber-exchange connection interface 130. In an alternative example, with reference to adaptor 200-3 of Figure 4, the second electrical connector 215 is arranged proximate to the first electrical connector 210 and on the same (front) face of the adaptor. By doing so, wires from new exchange equipment to the second electrical connector 215 can be received from a sideward direction (*i.e.* substantially perpendicularly to the direction in which first electrical connector 210 is connected to the subscriber-exchange connection interface 130), and this may improve wire management and/or permit retrofitting in certain arrangements of distribution blocks.

In order to isolate the second electrical connector 215 of adaptor 200-3 from the exchange equipment connection point 135-1 (without isolating the first electrical connector from the subscriber equipment connection point 135-2), the second electrical connector is configured so as not to mate with the exchange equipment connection point 135-1 when the adaptor is *in situ.* For example, the adaptor 200-3 is provided with a blocking protrusion 400 for this purpose. The blocking protrusion 400 is oversized relative to the second electrical connector and therefore maintains a gap between the second electrical connector 215 and the exchange equipment connection point 135-1.

Wire management is an important safety and practical consideration for distribution blocks given the number of individual wires running to and from the distribution block (which is all the more when new exchange equipment is retrofitted without removing the old exchange equipment). Accordingly, to improve wire management, the adaptors 200 are provided with a wire restraint 230 that confines incoming wires (*i.e.* from new exchange equipment). For example, the wire restraint is in the form of a wire tie or a hoop. The wire restraint 230 is arranged proximate to the second electrical connector 215, and so on the rear of adaptors 200-1 and 200-2, and on the front of adaptor 200-3.

### Alternatives and modifications

In one alternative, the adaptors 200 comprise a surge protector. The surge protector (for example, in the form of a gas discharge tube) is connected between the first and second connectors, via wiring 220, thereby to protect the electrical connection between the new exchange equipment and the subscriber equipment.

In another alternative, the second electrical connector is incompatible for direct connection to the subscriber-exchange connection interface 130 so as to prevent improper installation of the adaptor. For example, the second electrical connector 215 and the connection points 135 are both female connectors, or vice versa.

In a further example, the adaptor is provided without a grounding pin 225.

In yet a further example, the second electrical connector 215 is angled relative to the first electrical connector 210 (rather than, for example, orientated to face directly away). Reference numerals appearing in the claims are by way of illustration only and shall have no limiting effect on the scope of the claims.

## Claims

1. An adaptor (200) for retrofitting new exchange equipment (205) to a distribution frame (115) of a telecommunications network (100), the distribution frame having a connection (135-1) for existing exchange equipment (110) and a corresponding paired connection (135-2) for subscriber equipment (105), the adaptor comprising:
an engagement formation for engaging the adaptor to the distribution frame;
a first electrical connector (210) for connecting to the connection for subscriber equipment; and
a second electrical connector (215) for connecting new exchange equipment to the distribution frame via the adaptor, wherein the first and second electrical connectors are in electrical communication, and wherein the adaptor comprises only one first electrical connector and only one second electrical connector.

2. An adaptor according to Claim 1, wherein the first electrical connector (210) is electrically isolated from the connection (135-1) for existing exchange equipment (110) when the adaptor (200) is *in situ.*

3. An adaptor according to any preceding claim, wherein the engagement formation comprises the first electrical connector (210) and/or the second electrical connector (215).

4. An adaptor according to any preceding claim, wherein the second electrical connector (215) is arranged so as to be exposed for new electrical connections when the adaptor (200) is *in situ.*

5. An adaptor according to any preceding claim, wherein the first electrical connecter is arranged to connect to the connection (135-2) for subscriber equipment (105) via a surge protector interface (130) of the distribution frame (115).

6. An adaptor according to Claim 5, wherein the adaptor (200) is arranged to connect to the surge protector interface (130) in place of a surge protector module.

7. An adaptor according to Claim 5 or 6, wherein the engagement formation is configured to engage with the surge protector interface (130).

8. An adaptor according to any preceding claim, wherein the second electrical connector (215) is arranged distally to the first electrical connector (210).

9. An adaptor according to any preceding claim, wherein the second electrical connector (215) is arranged to face in an opposite direction to the first electrical connector (210).

10. An adaptor according to any of Claims 1 to 7, wherein the second electrical connector (215) is arranged to face in the same direction as the first electrical connector (210).

11. An adaptor according to any preceding claim, wherein the engagement formation, the first electrical connector (210) and the second electrical connector (215) are integrally formed.

12. An adaptor according to any preceding claim, further comprising: a wire restraint (230) for restraining wires from the new exchange equipment (205) that is connected to the second electrical connector (215); an overcurrent protector; a ground connector (225-1); and/or a wire stripper.

13. An adaptor according to any preceding claim, wherein the first (210) and/or second (215) electrical connectors comprise a pair of electrical contacts for connecting to a pair of wires (140).

14. A method of retrofitting, by means of an adaptor (200), new exchange equipment (205) to a distribution frame (115) of a telecommunications network (100), the distribution frame having a connection (135-1) for existing exchange equipment (110) and a corresponding paired connection (135-2) for subscriber equipment (105), the method comprising the steps of:
engaging the adaptor to the distribution frame by means of an engagement formation of the adaptor;
electrically connecting the adaptor to the connection for subscriber equipment by means of a first electrical connection (210) of the adaptor; and
electrically connecting the adaptor to new exchange equipment by means of a second electrical connection (215) of the adaptor, wherein the first and second electrical connections are in communication, thereby to connect the new exchange equipment to the connection for subscriber equipment, and wherein the adaptor comprises only one first electrical connection and only one second electrical connection.

15. A method according to Claim 14, wherein the adaptor (200) is an adaptor according to any of Claims 2 to 13.

## Patentansprüche

1. Adapter (200) zum Nachrüsten neuer Vermittlungseinrichtungen (205) an einen Verteilerrahmen (115) eines Telekommunikationsnetzes (100), wobei der Verteilerrahmen einen Anschluss (135-1) für bestehende Vermittlungseinrichtungen (110) und einen entsprechenden gepaarten Anschluss (135-2) für Teilnehmereinrichtungen (105) aufweist, wobei der Adapter umfasst:
eine Eingriffsformation zum Eingreifen des Adapters in den Verteilerrahmen;
einen ersten elektrischen Verbinder (210) zum Verbinden mit dem Anschluss für Teilnehmereinrichtungen; und
einen zweiten elektrischen Verbinder (215) zum Verbinden neuer Vermittlungseinrichtungen mit dem Verteilerrahmen über den Adapter, wobei der erste und der zweite elektrische Verbinder in elektrischer Verbindung stehen und wobei der Adapter nur einen ersten elektrischen Verbinder und nur einen zweiten elektrischen Verbinder umfasst.

2. Adapter gemäß Anspruch 1, wobei der erste elektrische Verbinder (210) von dem Anschluss (135-1) für das bestehende Vermittlungseinrichtungen (110) elektrisch isoliert ist, wenn der Adapter (200) *in situ* ist.

3. Adapter gemäß einem der vorhergehenden Ansprüche, wobei die Eingriffsformation den ersten elektrischen Verbinder (210) und/oder den zweiten elektrischen Verbinder (215) umfasst.

4. Adapter gemäß einem der vorhergehenden Ansprüche, wobei der zweite elektrische Verbinder (215) so angeordnet ist, dass er für neue elektrische Anschlüsse freiliegt, wenn der Adapter (200) *in situ* ist.

5. Adapter gemäß einem der vorhergehenden Ansprüche, wobei der erste elektrische Verbinder so angeordnet ist, dass er über eine Überspannungsschutzschnittstelle (130) des Verteilerrahmens (115) mit dem Anschluss (135-2) für Teilnehmereinrichtungen (105) verbunden wird.

6. Adapter gemäß Anspruch 5, wobei der Adapter (200) dazu eingerichtet ist, anstelle eines Überspannungsschutzmoduls an die Überspannungsschutzschnittstelle (130) angeschlossen zu werden.

7. Adapter gemäß Anspruch 5 oder 6, wobei die Eingriffsformation dazu ausgelegt ist, mit der Überspannungsschutzschnittstelle (130) in Eingriff zu kommen.

8. Adapter gemäß einem der vorhergehenden Ansprüche, wobei der zweite elektrische Verbinder (215) fern zum ersten elektrischen Verbinder (210) angeordnet ist.

9. Adapter gemäß einem der vorhergehenden Ansprüche, wobei der zweite elektrische Verbinder (215) so angeordnet ist, dass er in eine dem ersten elektrischen Verbinder (210) entgegengesetzte Richtung weist.

10. Adapter gemäß einem der Ansprüche 1 bis 7, wobei der zweite elektrische Verbinder (215) so angeordnet ist, dass er in dieselbe Richtung wie der erste elektrische Verbinder (210) weist.

11. Adapter gemäß einem der vorhergehenden Ansprüche, wobei die Eingriffsformation, der erste elektrische Verbinder (210) und der zweite elektrische Verbinder (215) einstückig ausgebildet sind.

12. Adapter gemäß einem der vorhergehenden Ansprüche, ferner umfassend: eine Drahtrückhaltevorrichtung (230) zum Zurückhalten von Drähten von der neuen Vermittlungseinrichtung (205), die mit dem zweiten elektrischen Verbinder (215) verbunden ist; einen Überstromschutz; einen Erdungsverbinder (225-1); und/oder einen Drahtabisolierer.

13. Adapter gemäß einem der vorhergehenden Ansprüche, wobei die ersten (210) und/oder zweiten (215) elektrischen Verbinder ein Paar elektrischer Kontakte zur Verbindung mit einem Paar von Drähten (140) umfassen.

14. Verfahren zum Nachrüsten neuer Vermittlungseinrichtungen (205) an einen Verteilerrahmen (115) eines Telekommunikationsnetzes (100) mittels eines Adapters (200), wobei der Verteilerrahmen einen Anschluss (135-1) für bestehende Vermittlungseinrichtungen (110) und einen entsprechenden gepaarten Anschluss (135-2) für Teilnehmereinrichtungen (105) aufweist, wobei das Verfahren die folgenden Schritte umfasst:
Eingreifen des Adapters in den Verteilerrahmen mittels einer Eingriffsformation des Adapters;
elektrisches Verbinden des Adapters mit dem Anschluss für Teilnehmereinrichtungen mittels eines ersten elektrischen Anschlusses (210) des Adapters; und
elektrisches Verbinden des Adapters mit einer neuen Vermittlungseinrichtung mittels eines zweiten elektrischen Anschlusses (215) des Adapters, wobei der erste und der zweite elektrische Anschluss in Verbindung stehen, um dadurch die neue Vermittlungseinrichtung mit dem Anschluss für die Teilnehmereinrichtung zu verbinden, und wobei der Adapter nur einen ersten elektrischen Anschluss und nur einen zweiten elektrischen Anschluss umfasst.

15. Verfahren gemäß Anspruch 14, wobei der Adapter (200) ein Adapter gemäß einem der Ansprüche 2 bis 13 ist.

## Revendications

1. Adaptateur (200) destiné à installer en rénovation un nouvel équipement (205) de central sur un répartiteur (115) d'un réseau (100) de télécommunications, le répartiteur possédant une connexion (135-1) pour un équipement existant (110) de central et une connexion appariée (135-2) correspondante pour un équipement (105) d'abonné, l'adaptateur comportant :
une formation d'interaction servant à faire interagir l'adaptateur avec le répartiteur ;
un premier connecteur électrique (210) destiné à se connecter à la connexion pour équipement d'abonné ; et
un second connecteur électrique (215) destiné à connecter un nouvel équipement de central au répartiteur par l'intermédiaire de l'adaptateur, les premier et second connecteurs électriques étant en communication électrique, et l'adaptateur comportant un seul premier connecteur électrique et un seul second connecteur électrique.

2. Adaptateur selon la revendication 1, le premier connecteur électrique (210) étant isolé électriquement de la connexion (135-1) pour équipement existant (110) de central lorsque l'adaptateur (200) est *in situ.*

3. Adaptateur selon l'une quelconque des revendications précédentes, la formation d'interaction comportant le premier connecteur électrique (210) et/ou le second connecteur électrique (215).

4. Adaptateur selon l'une quelconque des revendications précédentes, le second connecteur électrique (215) étant disposé de façon à être exposé pour de nouvelles connexions électriques lorsque l'adaptateur (200) est *in situ.*

5. Adaptateur selon l'une quelconque des revendications précédentes, le premier connecteur électrique étant disposé pour se connecter à la connexion (135-2) pour équipement (105) d'abonné par l'intermédiaire d'une interface (130) de protection contre les surcharges du répartiteur (115).

6. Adaptateur selon la revendication 5, l'adaptateur (200) étant disposé pour se connecter à l'interface (130) de protection contre les surcharges à la place d'un module de protection contre les surcharges.

7. Adaptateur selon la revendication 5 ou 6, la formation d'interaction étant configurée pour interagir avec l'interface (130) de protection contre les surcharges.

8. Adaptateur selon l'une quelconque des revendications précédentes, le second connecteur électrique (215) étant disposé de façon distale par rapport au premier connecteur électrique (210).

9. Adaptateur selon l'une quelconque des revendications précédentes, le second connecteur électrique (215) étant disposé de manière à être orienté dans une direction opposée à celle du premier connecteur électrique (210).

10. Adaptateur selon l'une quelconque des revendications 1 à 7, le second connecteur électrique (215) étant disposé de manière à être orienté dans la même direction que le premier connecteur électrique (210).

11. Adaptateur selon l'une quelconque des revendications précédentes, la formation d'interaction, le premier connecteur électrique (210) et le second connecteur électrique (215) étant formés d'un seul tenant.

12. Adaptateur selon l'une quelconque des revendications précédentes, comportant en outre : un moyen (230) de retenue de fils servant à retenir des fils provenant du nouvel équipement (205) de central qui est relié au second connecteur électrique (215) ; un moyen de protection contre les surintensités ; un connecteur (225-1) de terre ; et/ou un moyen de dénudage de fils.

13. Adaptateur selon l'une quelconque des revendications précédentes, les premier (210) et/ou second (215) connecteurs électriques comportant une paire de contacts électriques destinés à se connecter à une paire de fils (140).

14. Procédé d'installation en rénovation, au moyen d'un adaptateur (200), d'un nouvel équipement (205) de central sur un répartiteur (115) d'un réseau (100) de télécommunications, le répartiteur possédant une connexion (135-1) pour un équipement existant (110) de central et une connexion appariée (135-2) correspondante pour un équipement (105) d'abonné, le procédé comportant les étapes consistant à :
faire interagir l'adaptateur avec le répartiteur au moyen d'une formation d'interaction de l'adaptateur ;
connecter électriquement l'adaptateur à la connexion pour équipement d'abonné au moyen d'une première connexion électrique (210) de l'adaptateur ; et
connecter électriquement l'adaptateur à un nouvel équipement de central au moyen d'une seconde connexion électrique (215) de l'adaptateur, les première et seconde connexions électriques étant en communication, pour connecter ainsi le nouvel équipement de central à la connexion pour équipement d'abonné, et l'adaptateur comportant une seule première connexion électrique et une seule seconde connexion électrique.

15. Procédé selon la revendication 14, l'adaptateur (200) étant un adaptateur selon l'une quelconque des revendications 2 à 13.
